# EUROPÄISCHE PATENTANMELDUNG

(11) **EP 2 301 781 A1**
(43) Veröffentlichungstag der Anmeldung: **30.03.2011**
(21) Anmeldenummer: 10176860.4
(22) Anmeldetag: 15.09.2010
(51) Int. Cl.: B60H 3/06, B01D 46/00

(54) **Baugruppe für eine Luftbehandlungsvorrichtung**

(30) Priorität: 18.09.2009 DE 102009041796
(71) Anmelder: Behr GmbH & Co. KG, 70469 Stuttgart (DE)
(72) Erfinder: Engelhardt, Martin, 71254, Ditzingen (DE); Braitsch, Daniel, 70439 Stuttgart (DE); Boschert, Björn, 76228, Karlsruhe (DE)
(74) Vertreter: Grauel, Andreas

(57) **Zusammenfassung**

Die Erfindung betrifft eine Baugruppe (4, 5, 14, 16, 18) für eine Luftbehandlungsvorrichtung (1), die zumindest ein luftkontaktierendes Bauteil (17), sowie zumindest eine Dichtungseinrichtung (8, 17) aufweist. Zumindest eine Dichtungseinrichtung (8, 17) ist dabei als fluiddynamikunterstützte Dichtungseinrichtung (8, 17) ausgebildet, also derart, dass fluiddynamische Kräfte (L) beim Betrieb der Luftbehandlungsvorrichtung (1) die Dichtwirkung der Dichtungseinrichtung (8, 17) erhöhen und/oder zumindest zum Teil bewirken.

## Beschreibung

Die Erfindung betrifft eine Baugruppe für eine Luftbehandlungsvorrichtung, die zumindest ein luftkontaktierendes Bauteil sowie zumindest eine Dichtungseinrichtung aufweist.

Insbesondere im Kraftfahrzeugbau gilt es eine Vielzahl an Forderungen zu erfüllen, deren gleichzeitige Erfüllung sich als überaus problematisch erweisen kann. So wird beispielsweise ein möglichst einfacher und kostengünstiger Aufbau sowie eine möglichst einfache und kostengünstige Montage der im Kraftfahrzeugbau verwendeten Baugruppen bzw. der fertigen Kraftfahrzeuge gefordert. Weiterhin wird eine möglichst vorteilhafte Servicefähigkeit des fertigen Kraftfahrzeugs gefordert: Reparaturen sollen möglichst einfach und kostengünstig durchführbar sein. Darüber hinaus wird der Druck, die einzelnen Baugruppen eines Kraftfahrzeugs möglichst kompakt und leicht aufzubauen, mit zunehmender Komplexität der Kraftfahrzeuge größer. Die genannten Beispiele sind nur einige der unterschiedlichen, im Kraftfahrzeugbau typischerweise gestellten Forderungen.

Ein Beispiel für eine Baugruppe unter vielen, die von derartigen, sich zum Teil widersprechenden Forderungen betroffen ist, sind Kraftfahrzeugklimaanlagen. So weisen heutige Kraftfahrzeugkifmaaniagen häufig Filterdemente auf, mit denen die Außenluft und/oder Umluft von Verunreinigungen (beispielsweise Partikel unangenehme oder gesund heitsabtraglicbe Gase, Pollen oder Rußpartikel) gereinigt wird, bevor sie dem Kraftfahrzeuginnenraum zugeführt wird. Durch die Ausfilterung derartiger Verunreinigungen erfolgt eine zunehmende Beladung des Filtermaterials, wodurch insbesondere ein Anstieg von Druckverlusten zu verzeichnen ist. Dies bedeutet, dass nach einer gewissen Zeitspanne üblicherweise die Filter ausgetauscht werden müssen - es handelt sich somit bei Filtern um typische Verschleißbauteile. Um eine möglichst kostengünstige Montage der Kraftfahrzeugklimaanlage zu gewährleisten ist es von Vorteil, wenn die erforderlichen Filter möglichst als ein einzelner Filterblock (gegebenenfalls auch als eine möglichst kleine Anzahl von Filterblöcken) ausgebildet sind. Dies reduziert die zur Montage der Kraftfahrzeugklimaanlage erforderliche Anzahl an Montageschritten. Andererseits erfordert es die Einbausituation der Kraftfahrzeugklimaanlage im fertigen Kraftfahrzeug häufig, eventuelle Serviceöffnungen zur Kraftfährzeugklimaanlage möglichst klein auszubilden. In der Praxis wird zur Lösung dieses Problems oftmals auf zerstörend ausbaubare Serienfilter zurückgegriffen. Das heißt, dass die anfänglich in der Kraftfahrzeugklimaanlage verbaute Filteranordnung als einzelner Filterblock montiert wird. Aufgrund der relativ kleinen Serviceöffnung wird im Servicefall der anfängllch eingebaute, einzelne Filterblock zerstört und in Teilen ausgebaut beziehungsweise deformiert ausgebaut. Die Ersatzfilteranordnung wird anschließend in Form mehrerer Filterbaugruppen über die Serviceöffnung in die Kraftfahrzeugklimaanlage eingebracht

Bei dieser Lösung ist es in der Regel erforderlich, die Filterfläche in mehrere Einzelelemente zu teilen (oftmals reicht eine Teilung in zwei Einzelelemente aus). Eine derartige Teilung kann gegenüber einem einteiligen Filter jedoch eine deutlich erhöhte Leckage zwischen den einzelnen Filterelementen und dem Gehäuse, sowie insbesondere zwischen den einzelnen Filterelementen bewirken Insbesondere bei sehr hohen Luftmengen (und damit einer hohen Druckdifferenz zwischen den beiden Seiten der Filteranordnung) kann hier ein nicht unerheblicher Anteil der geförderten Luft aufgrund der beschriebenen Undichtigkeiten am Filter vorbei gefördert werden. Dadurch können Geruche und Partikel in den Kraftfahrzeuginnenraum gelangen, was naturgemäß unerwünscht ist.

In EP1 594 803 B1 wird ein Luftfilter für ein Kraftfahrzeug vorgeschlagen, der einen Rahmen aufwetst, welcher auf der ersten Seite einen Vorsprung und auf einer diesen ersten Seite gegenüber liegenden Seite eine zur Aufnahme eines Vorsprungs entsprechend profilierte Vertiefung aufweist, wobei sowohl der Vorsprung auch als die Vertiefung im Wesentlichen von einer Seite zur anderen Seite des Rahmens durchgehend ausgebildet sind. Problematisch bei der dort beschriebenen Vorrichtung ist der insgesamt relativ komplexe und kostenintensive Aufbau der Filterelemente. Darüber hinaus bedingt der Aufbau der Filterelemente eine wenig flexible, relativ aufwändige und zeitintensive Montage der Filterelemente in der Kraftfahrzeugkliiuaanlage.

Die Aufgabe der Erfindung besteht somit darin, gegenüber dem Stand der Technik verbesserte Baugruppen für Luftbehandlungsvorrichtungen vorzuschlagen.

Dazu wird vorgeschlagen, dass bei eher Baugruppe für eine Luftbehandlungsvorrichtung, die zumindest ein luftkontaktierendes Bauteil sowie zumindest eine Dichtungseinrichtung aufweist, zumindest eine Dichtungseinrichtung zumindest bereichsweise als fluiddynamikunterstützte Dichtungseinrichtung ausgebildet ist, derart, dass fluiddynamische Kräfte beim Betrieb der Luftbehandlungsvorrichtung die Dichtwirkung der Dichtungseinrichtung erhöhen und/oder zumindest zum Teil bewirken. Durch die vorgeschlagene Ausbildung der Dichtungseinrichtungen ist es auf verblüffend einfache Weise möglich, die Dichtungseinrichtungen besonders einfach, kostengünstig, filigran, elastisch, mit höheren Toleranzen versehen usw. auszubilden, ohne dass beim Betrieb der fertigen Luftbehandlungsvorrichtung übermäßige Dichtungsprobleme auftreten. Auch ist es möglich, dass bei der Montage der Baugruppe (oder mehrerer Baugruppen) in einer Luftbehandlungsvorrichtung die erforderlichen Montagekräfte verringert werden können, was einen besonders einfachen Service der Luftbehandlungsvorrichtung bewirkten kann. Besonders hervorzuheben ist dabei, dass es bei Betriebsbedingungen mit besonders hohen Fluidförderraten möglich ist, dass aufgrund der dabei entstehenden fiuiddynamischen Kräfte die Dichtwirkung der Dichtungseinrichtung mit erhöht werden kann. Wird also eine besonders hohe Dichtwirkung erforderlich, so wird diese parallel zum entstehenden Erfordernis automatisch" erzeugt. Die fluiddynamikunterstützte Wirkung kann dabei im Extremfall derart ausgestaltet sein, dass in einem ausgestalten Zustand der Luftbehandlungsvorrichtung keine bzw. eine nur minimale Dichtwirkung vorhanden ist, in dem Fall, in dem die Luftbehandlungsvorrichtung jedoch in Betrieb gesetzt wird, eine ausreichende Dichtwirkung erzeugt wird. Umgekehrt ist es natürlich auch möglich, dass der Großteil der Dichtwirkung unabhängig vom Betriebszustand der Luftbehandlungsvorrichtung erzeugt wird, und nur ein kleiner "Zusatzanteil" (von beispielsweise 10 % oder 20 %) aufgrund der fluiddynamischen Kräfte erzeugt wird. Selbstverständlich sind auch "Zwischenwerte" zwischen den beiden beschriebenen Extremwerten und/oder noch "extremere"Werte möglich.

Vortellhaft ist es, wenn zumindest eine, fluiddynamikunterstützte Dichtungseinrichtung zumindest bereichsweise flexibel, vorzugsweise elastisch ausgebildet ist. Mit einem derartigen Aufbau der Dichtungseinrichtung ist es auf besonders einfache Weise möglich, dass fiuiddynamische Kräfte zu einer erhöhten Dichtwirkung der Dichtungseinrichtung führen, Unter einer elastischen Ausbildung ist dabei insbesondere eine reversibel-elastische Ausführung zu verstehen, mithin einer Ausführung, bei der die Dichtungseinnchtung bei einem Wegfall fiuiddynamischer Kräfte (zumindest zum Tell) wieder in ihre Ausgarigslage zurückkehrt. Letzteres kann sich insbesondere in einem erneuten Servicefall der Luftbehandlungsvorrichtung als vorteilhaft erweisen.

Alternativ kann die Dichtungseinrichtung auch als starres, wenig elastisches Kunststoffteil ausgeführt sein. Dadurch ist eine Dichtwirkung zwar etwas vermindert, jedoch besteht die Möglichkeit, die Dichtungseinrichtung gleichzeitig als stabilisierenden Rahmen für das Bauteil zu nutzen.

Weiterhin kann es sinnvoll sein, wenn zumindest eine fluiddynamikunterstützte Dichtungseinrichtung zumindest bereichsweise als Dichtlippeneinrichtung ausgebildet ist, wobei die Dichtlippeneinrichtung vorzugsweise zumindest abschnittsweise unter einem Winkel angeordnet und/oder einen Winkel aufweisend ausgebildet ist. Auch mit einer derartigen Ausbildung kann eine Fluiddynamikunterstützung besonders einfach realisiert werden (also insbesondere eine Ausführung der Dichtungseinrichtung, bei der die beim Betrieb der Luftbehandlungsvorrichtung entstehenden fluiddynamischen Kräfte eine Erhöhung der Dichtigkeit der Dichtungseinrichtung bewirken). Die Winkelanordnung kann darüber hinaus auch zu einer gewissen Dichtigkeit der Dichtungseinrichtung, auch ohne Einwirkung fluiddynamischer Kräfte führen.

Möglich ist es, dass zumindest eine Fluiddynamik unterstützte Dichtungseinrichtung zumindest bereichsweise luftdurchlässig und/oder zumindest bereichsweise luftundurchlässig ausgebildet ist. Eine luftundurchlässige Bauausführung kann beispielsweise die Dichtigkeit der Dichtungseinrichtung erhöhen. Eine luftdurchlässige Ausführung dagegen kann beispielsweise eine reversible Verformung der Dichtungseinrichtung und/oder eine möglichst homogene, sich selbst korrigierende Anordnung der Dichtungseinrichtung fördern. Eine luftdurchlässige Ausführung der Dichtungseinrichtung sollte selbstverständlich so gewählt werden, dass nur ein relativ geringer Luftdurchsatz durch die Dichtungseinrichtung erfolgt.

Vorteilhaft kann es sein, wenn zumindest eine Baugruppe und/oder zumindest ein luftkontaktierendes Bauteil zumindest bereichsweise als Filterein∼ richtung ausgebildet ist. Gerade Filtereinrichtungen (Insbesondere solche für Kraftfahrzeugklimaanlagen) werden als Verschleißtelle relativ häufig getauscht, wobei aus den bereits beschriebenen Gründen bisweiters auf ein mehrteilig ausgebildetes Ersatzfilterbauteil zurückgegriffen wird. Unter Filtereinrichtung ist vorliegend insbesondere eine Vorrichtung zur Reinigung bzw. Aufbereitung eines Medienstromes wie beispielsweise Luft zu verstehen.

Wenn zumindest eine Baugruppe und/oder zumindest ein luftkontaktierendes Bauteil zumindest bereichsweise loporelloartig und/oder plissiert und/oder maanderförmig ausgebildet ist, ist es auf besonders einfache und platzsparende Weise möglich, dass das betreffende luftkontaktierende Bauteil bzw. die betreffende Baugruppe eine besonders große Kontaktoberfläche mit der zu behandelnden Luft aufweist. Dies erweist sich oftmals als besonders effektiv.

Besonders vorteilhaft erweist es sich dabei, wenn zumindest Teile zumindest einer fluiddynamikunterstützten Dichtungseinrichtung gleichartig wie zumindest Teile eines luftkontaktierenden Bauteils und/oder wie sonstige Teile zumindest einer Baugruppe ausgebildet sind. So ist es beispielsweise möglich, dass eine am Rand stehende "Falte" eines plissierten Luftfilters gleichzeitig als (luftdurchlässige) Dichtungseinrichtung zwischen zwei Einzelbaugruppen der gesamten Filteranordnung dient. Dieser Aufbau kann die Herstellungskosten der Baugruppen weiter verringern. Auch kann die Recydingfähigkeit der betreffenden Baugruppen gefördert werden. Besonders vorteilhaft ist es, wenn zumindest Teile der Baugruppe, insbesondere zumindest Teile zumindest eines luftkontaktierenden Bauteils und/oder zumindest Teile zumindest einer Dichtungseinrichtung symmetrisch angeordnet und/oder ausgebildet sind. Durch einen derartigen symmetrischen Aufbau ist es möglich, die Anzahl an unterschiedlichen, zu produzierenden und/oder vorrätig zu haltenden Baugruppen zu reduzieren. Auch kann die Montage der Baugruppen in der Luftbehandlungsvorrichtung reduziert werden. Dadurch sind durchaus nennenswerte Kostenreduktionen möglich.

Weiterhein wird vorgeschlagen bei einer technischen Vorrichtung, die eine Mehrzahl von Baugruppen aufweist, zumindest eine Baugruppe der technisehen Vorrichtung mit dem oben beschriebenen Aufbau auszuführen. Bevorzugt werden dabei zumindest zwei Baugruppen der technischen Vorrichtung bevorzugt nebeneinander liegend angeordnet. Die resultierende technische Vorrichtung kann somit bei einem relativ einfachen Aufbau einerseits eine besonders große Oberfläche einnehmen und andererseits eine besonders hohe Luftdichtigkeit aufweisen.

Als vorteilhaft erweist es sich dabei, wenn zumindest zwei Baugruppen der technischen Vorrichtung gleichartig aufgebaut sind, Dadurch kann die Anzahl der zu produzierenden und/oder vorrätig zu haltenden Baugruppen reduziert werden, sodass die Kosten für die technische Vorrichtung durchaus signifikant reduziert werden können.

Weiterhin wird vorgeschlagen, eine Klimaanlage, insbesondere eine Kraftfahrzeugklimaanlage, die einen Aufnahmeraum zur Aufnahme zumindest einer technischen Vorrichtung mit dem oben beschriebenen Aufbau und/oder zur Aufnahme zumindest einer, bevorzugt zur Aufnahme einer Mehrzahl von Baugruppen mit dem vorstehend beschriebenen Aufbau, zu versehen. Die Klimaanlage kann dann einerseits besonders einfach montiert werden (mit beispielsweise einem einzelnen Luftfilterblock, der im Servicefall zerstört oder deformiert wird), wöbei jedoch ein nach wie vor einfacher und kostengünstiger Filteraustausch der Klimaanlage möglich ist.

Besonders sinnvoll ist es dabei, wenn die Klimaanlage eine Zugangsöffnung zum Aufnahmeraum aufweist, wobei die Große der Zugangsöffnung auf die Größe eines Teils einer technischen Vorrichtung mit dem oben beschriebenen Aufbau und/oder auf die Große einer einzelnen Baugruppe mit dem vorab beschriebenen Aufbau angepasst ist. Dadurch ist es möglich, die Größe der Zugangsöffnung weitgehend zu minimieren, so dass der in einem Kraftfahrzeug zur Verfügung stehende Bauraum besser genutzt werden kann.

Besonders vorteilhaft ist es dabei, wenn in dem Aufnahmeraum der Klimaanlage eine technische Vorrichtung aufgenommen ist, welche größer ist als die Zugangsöffnung. Wie bereits beschrieben ist es möglich, bei einer initialen Montage der Kraftfahrzeklimaanlage im Rahmen der Herstellung des Kraftfahrzeugs einen einzelnen Filterblock zu montieren, der zerstörend oder deformiemnd über die Zugangsöffnung entfernt werden kann. Dadurch ist eine besonders einfache, schnelle und kostengünstige Herstellung der Kraftfahrzeugklimaanlage und damit auch des Kraftfahrzeugs möglich Der beschriebene Zustand entspricht somit üblicherweise dem Auslieferungszustand der Kraftfahrzeugklimaanlage bzw. des Kraftfahrzeugs.

Sinnvoll kann es auch sein, wenn in dem Aufnahmeraum der Klimaanlage eine technische Vorrichtung mit dem oben beschriebenen Aufbau und/oder zumindest eine, vorzugsweise eine Mehrzahl von Baugruppen mit dem oben beschriebenen Aufbau angeordnet ist, Die entspricht in aller Regel dem Zustand der Klimaanlage nach einem Wechsel der Filterelemente. Hierbei wurden die gegebenenfalls mehreren Filterelemente durch die relativ kleine Zugangsoffnung einzeln und gegebenenfalls nacheinander in den Aufnahmeraum der Klimaanlage eingesetzt.

Im Folgenden wird die Erfindung anhand vorteilhafter Ausführungsbeispiele und unter Bezugnahme auf die beigefügte Zeichnung näher erläutert. Es zeigen:
- Fig. 1:: ein erstes Ausführungsbeispiel einer Anordnung zweier Filter- elemente mit zwischenliegender, fluiddynamikunterstützter Dichtung im schematischen Querschnitt;
- Fig. 2:: ein zweites Ausführungsbeispiel einer Anordnung zweier Fi!ter- elemente mit zwischenliegender, fluiddynamikunterstützter Dichtung im schematischen Querschnitt;
- Fig. 3:: ein drittes Ausführungsbeispiel einer Anordnung zweier Filter- elemente mit zwischenliegender, fluiddynamikunterstützter Dichtung im schematischen Querschnitt;
- Fig. 4:: ein viertes Ausführungsbeispiel einer Anordnung zweier Filter- elemente mit zwischenliegender, fluddynamikunterstützter Dichtung im schematischen Querschnitt.

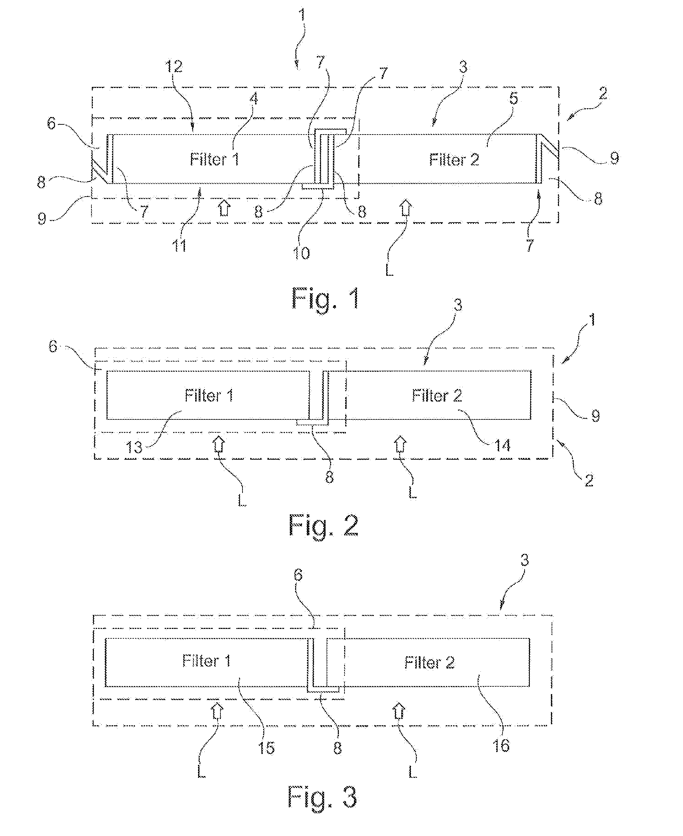

In Fig. 1 ist einer schematischen Querschnittsansicht ein erstes Ausführungsbeispiel für eine Filteranordnung 3 dargestellt, die aus vorliegend zwei Filtern 4, 5, besteht. Die Filteranordnung 3 ist in einem Luftführungskanal 2 einer Kraftfahrzeugklimaanlage 1 angeordnet (die Kraftfahrzeugklimaanlage 1 ist vorliegend nur schematisch angedeutet). Die Luftdurchströmung L durch den Luftführungskanal 2 der Kraftfahrzeugklimaanlage 1 erfolgt in Fig. 1 von unten nach oben. Fig. 1 zeigt insbesondere eine Situation nach einem bereits erfolgten Service der Kraftfahrzeugklimaanlage 1, das heißt, dass es sich nicht mehr um die ursprünglich eingebaute Filter handelt, und es sich bei den Filtern 4, 5 vielmehr um Ersatzfilter handelt. Da bei der Kraftfahrzeugklimaanlage 1 die Serviceöffnung 6 (in Fig. 1 ebenfalls nur schematisch angedeuted) aus Bauraumgründen möglichst klein ausgeführt werden muss, erweist es sich als erforderlich, die Filteranordnung 3 nicht einteilig ausführen zu müssen. In vorliegen dargestelltem Ausführungsbeispiel ist die Serviceöffnung 6 geringfügig größer als ein einzeines Filterelement 4, 5 ausgebildet. Im Übrigen sind im ersten Ausführungsbeispiel gemäß Fig. 1 beide Filter 4, 5 identisch ausgebildet was Vorteile bei der Herstellung und Lagerung hat.

Wie man in Fig. 1 erkennen kann, ist an den Seitenbereichen 7 der Filter 4, 5 jeweils eine im unverformten Zustand L-förmig geformte Dichtlippe 8 angeordnet. Die Dichtlippen 8 sind beispielsweise aus einem Vliesmaterial ggfs. demselben Material wie das Filtermaterial oder aus einem Silikonmaterial gefertigt. Vorteilhaft ist es dabei, dass die Dichtlippen 8 keine übermäßig große Eigensteifigkeit aufweisen müssen. Die Dichtlippen 8, die sich zwischen den Filtern 4, 5 und den Begrenzungswänden 9 des Luftführungskanals 2 befinden sind aufgrund der Dimensionierung von Luftführungskanal 2 und Filtern 4, 5 mechanisch einwärts gedrückt, und sorgen so für eine Abdichtung, derart, dass der Luftstrom L nicht durch die zwischen den Filtern 4, 5 und den Begrenzungswänden 9 des Luftführungskanals 2 befindlichen Spalte hindurch treten kann.

Im ausgeschalteten Zustand der Kraftfahrzeugklimaanlage 1 (es herrscht kein Luftstrom L und damit auch keine Druckdifferenz zwischen der Einströmfläche 11 und der Ausströmfläche 12 der Filteranordnung 3) sind die Dichtlippen 8, die den Übergang zwischen den beiden Filtern 4, 5 abdichten, zunächst unverformt. Sobald jedoch das Gebläse der Kraftfahrzeugklimaanlage 1 eingeschaltet wird und ein Luftstrom L erzeugt wird, wird der stirnseitige (im Bereich der Einströmfläche 11 liegende) Flanschteil 10 des zweiten Filters 5, der auf der Einströmfläche 11 (also der Luvseite der Luftströmung L) angeordnet ist, gegen die Einströmfläche 11 des ersten Filters 4 gedrückt. Dadurch entsteht eine besonders effektive Dichtwirkung für den zwischen den beiden Filtern 4, 5 befindlichen Spalt. Es ist dabei anzumerken, dass die Dichtkraft der Dichtlippe 8 umso größer wird, je stärker die Luftströmung L wird - und damit, je größer die Druckdifferenz zwischen Einströmfläche 11 und Ausströmfläche 12 der Filteranordnung 3 wird.

Die am ersten Filter 4 in Richtung zum zweiten Filter 5 angeordnete, auf der Ausströmfläche 12 befindliche Dichtlippe 8 weist demgegenüber keine (bedeutende) Dichtwirkung auf. Wie man der Fig. 1 entnehmen kann, würde diese durch die Luftströmung L im Gegenteil geöffnet werden. Die Dichtwirkung muss also durch den Flanschteil 10 der am zweiten Filter 5 angeordneten Dichtlippe 8 erfolgen, was diese jedoch problemlos übernehmen kann. Obwohl die entsprechende Dichilippe 8 somit "nutzlos" ist, kann sich dennoch eine Kostenreduktion ergeben, da die beiden Filter 4, 5 identisch aufgebaut sein können und sich Kostenvorteile bei Herstellung und Lagerung der Filter 4, 5 ergeben können.

In Fig. 2 ist ein zweites Ausführungsbeispiel für eine Filteranordnung 3 aus zwei unterschiedlich geformten Filtern 13, 14 dargestellt. Zwar sind die äußeren Abmessungen der beiden Filter 13, 14 im Wesentlichen gleich (die äußeren Abmessungen der Filter 13, 14 sind geringfügig kleiner als die Serviceöffnung 6 der Kraftfahrzeugklimaanlage 1), jedoch ist lediglich der zweite Filter 14 mit einer L-förmigen Dichtlippe 8 versehen. Der erste Filter 13 weist dagegen keine Dichtlippe 8 auf. Dadurch ist es möglich, insbesondere den ersten Filter 13 einfacher aufzubauen, ohne dass es zu einer Verringerung der Dichtwirkung kommt. In den Spaltbereichen zwischen den beiden Filtern 13, 14 und den Begrenzungswänden 9 des Luftführungskanals 2 können beliebige Dichtmittel vorgesehen werden (vorliegend nicht dargestellt). Insbesondere ist es auch möglich, auch in diesem Bereich Dichtlippen 8 analog zu Ftg. 1 vorzusehen.

In Fig. 3 ist schließlich eine geringfügige Modifikation gegenüber Fig. 2. dargestellt. Hier besteht die Filteranordnuug 3 ebenfalls aus zwei unterschiedlich ausgeführten Filtern 15, 16. Vorliegend ist jedoch der erste Filter 15 mit einer Dichtlippe 8 versehen, wohingegen der zweite Filter 16 keine derartige Dichtlippe aufweist (zumindest im Bereich des Spalts zwischen den beiden Filtern 15,16).

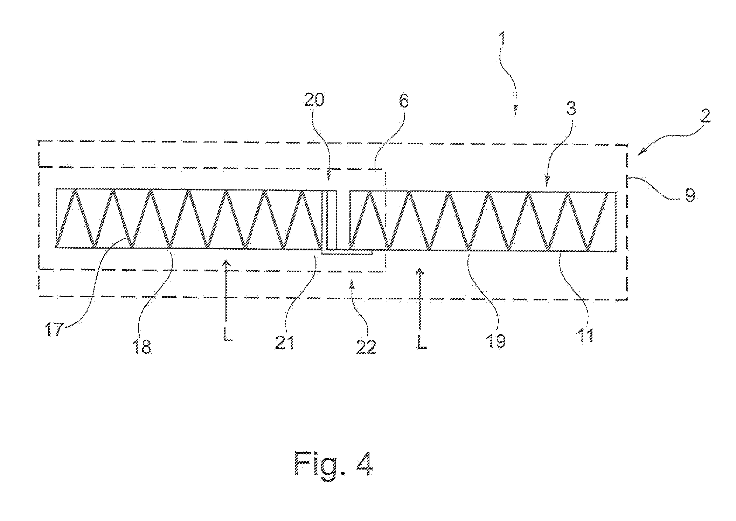

In Fig. 4 ist schließlich ein viertes Ausführungsbeispiel für eine Filteranordnung 3 dargestellt. Vorliegend sind die beiden Filter 18, 19 der Filteranordnung 3 als plissierte Filterblöcke 18, 19 ausgebildet. Die eigentlichen Filtermatten oder Filtervlieslagen 17 sind in einer Zickzackanordnung aufgefaltet. Dadurch ergibt sich eine größere Luftdurchtrittsfläche der beiden Filter 18, 19. Im Verbindungsbereich 20 der beiden Filter 18, 19 ist die Filtermatte 17 des in Fig. 4 linken Filters 18 verlängert ausgeführt und mit einem Knickbereich 21 versehen. Die Geometrie des Filters 18 ist derart gewählt, dass der Endbereich 22 der Filtermatte 17 dank des Knickbereichs 21 einen L-förmigen Fortsatz blidet, der beim Vorhandensein einer Luftströmung L gegen die Einströmfläche, 11 des zweiten Filters 19 gedrückt wird. Somit wird die Abdichtung des Verbindungsspaits zwischen den beiden Filtern 18, 19 durch einen Teil einer Filtermatte 17 eines der beiden beteiligten Filter 18, 19 gebildet. Dadurch kommt es zwar zu einer Luftdurchströmung durch den Verbindungsspalt 20 - jedoch wird die durch den Spalt 20 hindurch strömende Luft gefiltert, so dass hier kern "Problem" auftritt.

Auch vorliegend können die zwischen den beiden Filtern 18, 19 und den Begrenzungswänden 9 des Luftführungskanals 2 liegenden Spalte durch beliebige Dichtmittel abgedichtet werden.

### Bezugszeichenliste

- 1.: Kraftfahrzeugklimaanlage
- 2.: Luftkanal
- 3.: Filteranordnung
- 4.: erster Filter
- 5.: zweiter Filter
- 6.: Serviceöffnung
- 7.: Seitenbereich
- 8.: Dichtlippe
- 9.: Begrenzungswand
- 10.: Flanschieil
- 11.: Einströmfläche
- 12.: Ausströmfläche
- 13.: erster Filter
- 14.: zweiter Filter
- 15.: erster Filter
- 16.: zweiter Filter
- 17.: Filtermatte
- 18.: erster Filter
- 19.: zweiter Filter
- 20.: Verbindungsbereich
- 21.: Knickbereich
- 22.: Endbereich

## Patentansprüche

1. Baugruppe (4, 5, 14, 16, 18) für eine Luftbehandlungsvorrichtung (1), aufweisend zumindest ein luftkontaktierendes Bauteil (17), sowie zumindest eine Dichtungseinrichtung (8, 17), **dadurch gekennzeichnet, dass** zumindest eine Dichtungseinrichtung (8, 17) zumindest bereichsweise als fluiddynamikunterstützte Dichtungseinrichtung (8, 17) ausgebildet ist, derart, dass fluiddynamische Kräfte (L) beim Betrieb der Luftbehandlungsvorrichtung (1) die Dichtwirkung der Dichtungseinrichtung (8, 17) erhöhen und/oder zumindest zum Teil bewirken.

2. Baugruppe (4, 5, 14, 16, 18) nach Anspruch 1, **dadurch gekennzeichnet, dass** zumindest eine fluiddynamikunterstützte Dichtungseinrichtung (8, 17) zumindest bereichsweise flexibel, vorzugsweise elastisch ausgebildet ist.

3. Baugruppe (4, 5, 14, 16, 18) nach Anspruch 1 oder 2, **dadurch gekennzeichnet, dass** zumindest eine fluiddynamikunterstützte Dichtungseinrichtung (8, 17) zumindest bereichsweise als Dichtlippeneinrichtung (8) ausgebildet ist, wobei die Dichtlippeneinrichtung (8) vorzugsweise zumindest abschnittsweise unter einem Winkel angeordnet und/oder einen Winkel aufweisend ausgebildet ist.

4. Baugruppe (4, 5, 14, 16, 18) nach einem der vorangehenden Ansprüche, **dadurch gekennzeichnet, dass** zumindest eine fluiddynamikunterstützte Dichtungseinrichtung (8, 17) zumindest bereichsweise luftdurchlässig (17) und/oder zumindest bereichsweise luftundurchlässig (8) ausgebildet ist.

5. Baugruppe (4, 5, 14, 16, 18) nach einem der vorangehenden Ansprüche, **dadurch gekennzeichnet, dass** zumindest eine Baugruppe (4, 5, 14, 16, 18) und/oder zumindest ein luftkontaktierendes Bauteil (17) zumindest bereichsweise als Filtereinrichtung (17) ausgebildet ist.

6. Baugruppe (4, 5, 14, 16, 18) nach einem der vorangehenden Ansprüche, insbesondere nach Anspruch 5, **dadurch gekennzeichnet, dass** zumindest eine Baugruppe (4, 5, 14, 16, 18) und/oder zumindest ein luftkontaktierendes Bauteil (17) zumindest bereichsweise leporelloartig und/oder plissiert (17) und/oder mäanderförmig ausgebildet ist.

7. Baugruppe (4, 5, 14, 16, 18) nach einem der vorangehenden Ansprüche, insbesondere nach Anspruch 4 und/oder Anspruch 6, **dadurch gekennzeichnet, dass** zumindest Teile zumindest einer fluiddynamikunterstützten Dichtungseinrichtung (17) gleichartig wie zumindest Telle eines luftkontaktierenden Bauteils (17) und/oder wie sonstige Teile zumindest einer Baugruppe (18, 19) ausgebildet sind.

8. Baugruppe (4, 6, 14, 16, 18) nach einem der vorangehenden Ansprüche, **dadurch gekennzeichnet, dass** zumindest Teile der Baugruppe (4, 5, 14, 16, 18), insbesondere zumindest Teile zumindest eines luftkontaktierenden Bauteils (17) und/oder zumindest Teile zumindest einer Dichteinrichtung (8, 17) symmetrisch angeordnet und/oder ausgebildet sind.

9. Technische Vorrichtung (3), aufweisend eine Mehrzahl von Baugruppen (4, 5, 13, 14, 15, 16, 18, 19), **dadurch gekennzeichnet, dass** zumindest eine Baugruppe (4, 5, 13, 14, 15, 16, 18, 19) der technischen Vorrichtung (3) als Baugruppe (4, 5, 14, 16. 18) nach einem der Ansprüche 1 bis 8 ausgebildet sind, wobei die zumindest zwei Baugruppen (4, 5, 13, 14, 15, 16, 18, 19) bevorzugt nebeneinanderliegend angeordnet sind.

10. Technische Vorrichtung (3) nach Anspruch 9, **dadurch gekennzeichnet, dass** zumindest zwei Baugruppen (4, 5, 13, 14, 15, 16, 18, 19) gleichartig aufgebaut sind

11. Klimaanlage (1), insbesondere Kraftfahrzeugklimaanlage (1), aufweisend einen Aufnahmeraum (2) zur Aufnahme zumindest einer technischen Vorrichtung (3) nach Anspruch 9 oder 10 und/oder zur Aufnahme zumindest einer, bevorzugt zur Aufnahme einer Mehrzahl von Baugruppen (4, 5, 13, 14, 15, 16, 18, 19), insbesondere von Baugruppen (4, 5, 14, 16, 18) nach einem der Ansprüche 1 bis 8.

12. Klimaanlage (1) nach Anspruch 11, **gekennzeichnet durch** eine Zugangsöffnung. (6) zum Aufnahmeraum (2), wobei die Größe der Zugangsöffnung (6) vorzugsweise auf die Größe eines Teils einer technischen Vorrichtung (3) nach Anspruch 9 oder 10 und/oder auf die Größe einer einzelnen Baugruppe (4, 5, 13, 14, 15, 16, 18, 19), insbesondere einer Baugruppe (4, 5, 14, 16, 18) nach einem der Ansprüche 1 bis 8 angepasst ist.

13. Klimaanlage (1) nach Anspruch 11 oder 12, **dadurch gekennzeichnet, dass** in dem Aufnahmeraum (2) eine technische Vorrichtung (3) aufgenommen ist, welche größer, ist als die Zugangsöffnung (6).

14. Klimaanlage (1) nach einem der Ansprüche 11 bis 13, **dadurch gekennzeichnet, das** in dem Aufnahmeraum (2) eine technische Vorrichtung (3) nach Anspruch 9 oder 10 und/oder zumindest eine, vorzugsweise eine Mehrzahl von Baugruppen (4, 5, 13, 14, 15, 16, 18, 19), insbesondere von Baugruppen (4, 5, 14, 16, 18) nach einem der Ansprüche 1 bis 8 angeordnet ist.
